# EUROPÄISCHE PATENTSCHRIFT

(11) **EP 1 071 297 B1**
(45) Veröffentlichungstag und Bekanntmachung des Hinweises auf die Patenterteilung: **20.02.2008**
(21) Anmeldenummer: 00115361.8
(22) Anmeldetag: 15.07.2000
(51) Int. Cl.: H04Q 7/32, G01S 11/00, H04M 1/725

(54) **Bestimmung der Betriebszustände eines bedienbares Geräts**
Operational modes determination of a controlled device
Détermination des modes opératoires d'un appareil contrôlable

(30) Priorität: 21.07.1999 DE 19934105
(43) Veröffentlichungstag der Anmeldung: 24.01.2001
(73) Patentinhaber: Nokia Corporation, 02150 Espoo (FI)
(72) Erfinder: Krüger, Andreas, 44789 Bochum (DE); Hansen, Hans, 1720 Kobenhavn V (DK); Theimer, Wolfgang, 44795 Bochum (DE); Kespohl, Klaus, 44809 Bochum (DE); Leppinen, Mika, Woburn, 01801 MA (US); Keinonen, Turkka, 03150 Huhmari (FI); Roque-Cerna, Maximiliano, 89312 Günzburg (DE); Koppinen, Anne, 33100 Tampere (FI); Kirjavainen, Anne, 02100 Espoo (FI)
(74) Vertreter: Becker Kurig Straus

(56) Entgegenhaltungen:
- EP-A- 0 851 699
- EP-A- 0 854 584
- EP-A- 0 880 296
- WO-A-98/07265
- US-A- 5 814 798
- PATENT ABSTRACTS OF JAPAN Bd. 017, Nr. 019 (E-1306), 13. Januar 1993 (1993-01-13) & JP 04 246925 A (NEC),

## Beschreibung

### Technisches Gebiet

Die Erfindung bildet einen Beitrag zur sicheren und/oder komfortablen Nutzung von bedienbaren Geräten in oder unter Gegebenheiten, die die Aufmerksamkeit eines Nutzers anderweitig auslasten.

### Stand der Technik

Im Stand der Technik sind eine Vielzahl von bedienbaren Geräten bekannt, die jeweils über ein Bedienfeld verfügen, über welches ein Nutzer des Geräts vorhandene Betriebszustände herstellen und/oder verändern kann. Als Beispiele für derartige Geräte seien nur Telefone oder Musikanlagen genannt. Diese Geräte zeichnen sich dadurch aus, dass zur Herstellung und/oder Veränderung von Betriebszuständen mindestens ein Kopf oder eine Taste bedient werden muss. Dies mag noch hinnehmbar sein, wenn der Nutzer dem bedienbaren Gerät die uneingeschränkte Aufmerksamkeit schenken kann. Vielfach ist es aber so, dass durch anderweitige Vorgänge oder Umstände der Nutzer dem bedienbaren Gerät gar keine Aufmerksamkeit schenken will oder kann. Ist beispielsweise ein Telefon oder eine Musikanlage in einem Fahrzeug installiert, ist es vom Sicherheitsaspekt her kaum nachvollziehbar, wenn der Fahrer während des Betriebs Fahrzeugs dennoch telefoniert oder eine Kassette wechselt.

In dem Dokument EP0851699 ist beispielsweise ein Funkkommunikationsgerät offenbart, das eine Funkkommunikationsschaltung und eine Schaltung zur Erfassung der Geschwindigkeit der Funkkommunikationsschaltung in Bezug auf eine Basisstation umfasst. Die Geschwindigkeit wird in EP0851699 aus einer Ausgabe der Funkkommunikations-Schaltung ermittelt. EP0851699 offenbart dabei verschiedene Sicherheitsvorgänge wie das Missachten eingehender Anrufe können selektiv entsprechend der Geschwindigkeit ausgeführt werden, wenn sich das Fahrzeug, in dem sich die Funkkommunikationsschaltung befindet, mit hoher Geschwindigkeit bewegt.

Neben dem Sicherheitsaspekt ist auch bei vielen bedienbaren Geräten der Komfort aspekt wenig ausgebildet. So wird beispielsweise in einem Fahrzeug, welches mit einem fest eingebauten Telefon versehen ist, von einem Nutzer, wenn er eine Rufumleitung wünscht, eine entsprechende Eingabe verlangt. Dies wird oftmals als lästig empfunden und daher unterlassen. Dieses Unterlassen ist abgesehen von der nicht gegebenen Erreichbarkeit folgenlos. Anders verhält es sich aber, wenn ein Nutzer sein Mobiltelefon oder Laptops versehentlich an Orten benutzt, an denen beispielsweise aus Sicherheitsgründen die Benutzung von derartigen Geräten verboten ist.

Auch ist es kaum nachvollziehbar, dass bei Mobiltelefonen sämtliche eingehenden Gespräche an den Nutzer weitergegeben werden. Dies mag in der Mehrzahl der Fälle wünschenswert sein, kann aber im Einzelfall etwa dann zu Problemen führen, wenn beispielsweise während einer geschäftlichen Besprechung auch Privat gespräche an den Nutzer "durchgestellt" werden.

Auch wenn sich die in diesem Zusammenhang dargestellten Probleme nur auf Telefone und Musikanlagen beziehen, sei der Vollständigkeit halber darauf hingewiesen, dass diese Probleme auch bei anderen bedienbaren Geräten gegeben sind. So ist beispielweise die Einstellung der Klimaanlage oder des Navigations systems während einer Autofahrt ebenso gefährlich, wie der Betrieb des Autotelefons.

Daher liegt der Erfindung die Aufgabe zugrunde, ein bedienbares Gerät anzugeben,
welches zum einen sowohl den Sicherheits- als auch den Komfortaspekt berücksichtigt.

### Darstellung der Erfindung

Diese Aufgabe wird mit den in Anspruch 1 angegebenen Merkmalen gelöst. Vorteilhafte Aus- und Weiterbildungen der Erfindung sind den Ansprüchen 2 und 3 entnehmbar.

Es wird gemäß der vorliegenden Erfindung ein Bedienbares Gerät für bzw. in einem Fahrzeug bereitgestellt. Das bedienbare Gerät verfügt über ein Bedienfeld, über welches ein Nutzer vorhandene Betriebszustände des bedienbaren Geräts herstellen und/oder verändern kann. In dem Fahrzeug ist mindestens ein Sensor vorhanden. Das bedienbare Gerät umfasst eine Entscheidungsanordnung, die Daten des mindestens einen Sensors empfangen kann. Die Entscheidungsanordnung ist so ausgebildet, dass die von dem mindestens einem Sensor erhaltenen Sensordaten in ein zeitabhängiges Fahrprofil umgesetzt werden. Die Entscheidungsanordnung wertet das Fahrprofil aus. Auf der Grundlage der Auswertung entscheidet die Entscheidungsanordnung über die Nutzbarkeit des bedienbaren Gerätes, indem bestimmte Betriebszustände des bedienbaren Gerätes gesperrt oder freigeschaltet werden.

Anhand von empfangenen Daten sperrt die Entscheidungsvorrichtung sperrt bestimmte Betriebszustände des bedienbaren Geräts oder schaltet sie frei. Dadurch können anhand der Daten gefährliche Situationen ermittelt werden, was dazu führen kann, dass beispielsweise bestimmte Betriebszustände nicht mehr ausgeführt werden können und/oder die manuelle Betätigung des Bedienfeldes unmöglich wird.
Letzteres führt auch zu einem nicht zu unterschätzenden Lerneffekt, da durch die wie auch immer geartete Funktionseinschränkung der Nutzer ein besseres Gefühl für gefährliche Situationen entwickelt und daher aufgrund des Wissens um die Erfolglosigkeit seines Tuns in gefährlichen Situationen die Bedienung des bedienbaren Geräts automatisch unterlässt.

### Kurze Darstellung der Figuren

Es zeigen:
- Fig. 1: ein Kraftfahrzeug
- Fig. 2: ein Mobiltelefon

### Beschreibung

Die Erfindung soll nun anhand der Figuren näher erläutert werden.

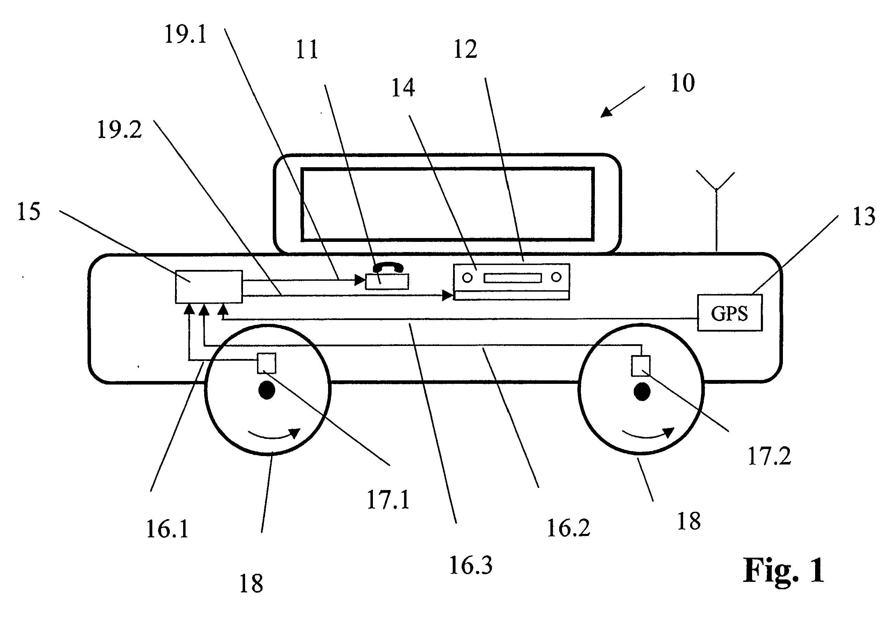

In Fig. 1 ist schematisch ein Kraftfahrzeug 10 gezeigt. Dieses Kraftfahrzeug ist mit einem Autotelefon 11, einem Autoradio 12 und einem Navigationssystem 13 ausgestattet. Nur der Vollständigkeit halber sei darauf hingewiesen, dass das Autotelefon 11, das Autoradio 12 und das Navigationssystem 13 jeweils den Begriff eines bedienbaren Geräts ausfüllen. Aus Gründen der Übersichtlichkeit wurde aber nur beim Autoradio 12 das Bedienfeld 14 näher veranschaulicht.

Außerdem ist noch eine Entscheidungsanordnung 15 vorhanden. Diese Entscheidungsanordnung 15 ist über Leitungen 16.1, 16.2 mit Sensoren 17.1, 17.2 verbunden. Dabei hat der Sensor 17.1 die Aufgabe, die Geschwindigkeit des Fahrzeugs 10 zu ermitteln. Über den Sensor 17.2 wird die Betätigung der Fahrzeugbremse (nicht gezeigt) ermittelt. Auch wenn sich die Darstellung in Fig. 1 nur auf zwei Sensoren 17 beschränkt, ist damit keine Reduktion auf diese Sensoren 17 verbunden. Vielmehr können in einem anderen - nicht dargestellten - Ausführungsbeispiel auch Sensoren vorhanden sein, welche beispielsweise die Lenkeinschläge des Fahrzeugs 10 oder den Neigungswinkel des Fahrzeugs 10 ermitteln. Welche Art von Sensoren 17 verwendet werden, liegt im Belieben des Fachmanns. Auch ist die Anordnung der Sensoren 17.1, 17.2 - nicht wie in Fig. 1 gezeigt - auf die Räder 18 des Fahrzeugs 10 beschränkt. So ist es beispielsweise in einem anderen - nicht dargestellten - Ausführungsbeispiel denkbar, dass der Sensor 17.1 die Geschwindigkeit des Fahrzeugs 10 am Tachometer (nicht gezeigt) ermittelt oder dass bei ohnehin schon im Fahrzeug 10 vorliegenden Geschwindigkeitsdaten diese direkt der Entscheidungsanordnung 15 zugeführt werden.

Ferner ist die Entscheidungsanordnung 15 über eine Datenleitung 19.1 mit dem Autotelefon 11 und über eine Datenleitung 19.2 mit dem Autoradio 12 verbunden.

Zum besseren Verständnis der Erfindung sei angenommen, dass das Fahrzeug 10 mit einer Geschwindigkeit zwischen 100 und 140 km/h über eine Autobahn bewegt wird. Ferner sei angenommen, dass eine Bedienung des Autotelefons 11 und/oder des Autoradios 12 oberhalb einer Geschwindigkeit von 130 km/h als gefährlich gilt.

### Beispiel 1:

In diesem Beispiel ist nur der Sensor 17.1 vorhanden und liefert laufend Geschwindigkeitswerte an die Entscheidungsanordnung 15. Die Entscheidungsanordnung 15 ist als Schwellwertschalter - nicht näher dargestellt - ausgebildet. Werden dem Schwellwertschalter vom Sensor 17.1 Geschwindigkeitswerte zur Verfügung gestellt, die oberhalb der als gefährlich angesehenen Geschwindigkeit von 130 km/h liegen, wird ein Signal ausgelöst und auf die Datenleitungen 19.1, 19.2 gegeben. Dieses Signal sperrt dann die Bedienbarkeit des Bedienfeldes 14 am Autoradio 12 und verhindert, dass weder Telefongespräche im Fahrzeug 10 angenommen werden noch aus dem Fahrzeug 10 geführt werden können.

Nur der Vollständigkeit halber sei darauf hingewiesen, dass nicht notwendig für das Autoradio 12 und das Autotelefon 11 gleiche die Nutzung einschränkende Geschwindigkeiten gelten müssen. So kann beispielsweise das Telefonieren schon bei Geschwindigkeiten oberhalb von 100 km/h ausgesetzt sein, während die Bedienbarkeit des Autoradios 12 erst bei Geschwindigkeiten von oberhalb 120 km/h beschränkt wird. Auch können die verschiedenen Betriebszustände des Autotelefons 11 von der jeweiligen Geschwindigkeit abhängig sein. So kann beispielsweise ein Rufaufbau aus dem Fahrzeug 10 schon bei Geschwindigkeiten oberhalb von 50 km/h ausgeschlossen sein, während ein Empfangen von Telefongesprächen - insbesondere wenn eine Freisprecheinrichtung vorhanden ist - noch bis 160 km/h möglich bleibt.

Wird die Telefonfunktion des Autotelefons 12 bzw. die Bedienbarkeit des Autoradios 11 wegen der gefahrenen Geschwindigkeit ausgesetzt, kann der Fahrer gleichzeitig mit der Signalabgabe auf die Datenleitungen 19.1, 19.2 über diesen Zustand optisch oder akustisch informiert werden. Im Zusammenhang mit dem Autotelefon 12 kann vorgesehen sein, dass eingehende Gespräche auch dann dem Fahrer mitgeteilt werden, selbst wenn die gerade gefahrene Geschwindigkeit eine Annahme des Gesprächs ausschließt. Hierdurch wird dem Fahrer die Möglichkeit gegeben, seine Geschwindigkeit zu reduzieren, um dann das Gespräch anzunehmen. Auch kann die Anordnung so beschaffen sein, dass bei das Telefonieren ausschließenden Geschwindigkeiten eingehende Anrufe sofort auf ein anderes Telefon umgeleitet werden. Schließlich kann die Anordnung so ausgebildet sein, dass bei eingehenden Gesprächen oberhalb von Geschwindigkeiten, die das Telefonieren ausschließen, die Nummer des Anrufers gespeichert wird. Sinkt dann in der Folgezeit die gefahrene Geschwindigkeit unter den kritischen Wert ab, kann die gespeicherte Nummer zur automatischen Anwahl des Anrufers genutzt werden.

Auch kann die Entscheidungsanordnung 15 so ausgebildet sein, dass über einen Zeitraum t die Schwankungsbreite einer gefahrenen Geschwindigkeit gemessen und zum Maßstab für die Bedienbarkeit bzw. Nutzbarkeit der bedienbaren Geräte gemacht wird. Wird beispielsweise während des Zeitraums t eine Geschwindigkeit von 100 km/h mit einer Schwankungsbreite von +/- 5 km/h festgestellt, so spricht dies im Vergleich zu einer Schwankungsbreite von +/- 30 km/h für eine gering und damit beispielsweise das Telefonieren erlaubende Beanspruchung des Fahrers.

Ist das Fahrzeug 10 mit einem Navigationssystem 13 ausgestattet, welches dem Fahrer durch entsprechende Ansagen den Weg zu seinem Zielort angibt, kann die Entscheidungsanordnung 15 auch so modifiziert sein, dass bei Geschwindigkeiten, die oberhalb einer kritischen Geschwindigkeit liegen, die entsprechenden Ansagen mindestens doppelt wiedergegeben werden, während bei niedrigeren Geschwindigkeiten die Ansage nur einmal ausgegeben wird.

Wenngleich die im Beispiel 1 erörterte geschwindigkeitsabhängige Nutzbarkeit der bedienbaren Geräte 11, 12 schon einen unbestrittenen Beitrag zur Sicherheit leistet, ist diese Art der Beeinflussung von Betriebszuständen sehr statisch, denn vom Sicherheitsstandpunkt kann bei ruhiger Fahrweise beispielweise ein Telefonieren auch oberhalb einer Geschwindigkeit von 130 km/h unkritisch sein, während in einer anderen Situation schon Geschwindigkeiten oberhalb von 70 km/h ein Sicherheitsrisiko darstellen können. Deshalb wird im Zusammenhang mit dem Beispiel 2 eine flexiblere Lösung erörtert werden.

### Beispiel 2:

Um dies zu realisieren, wird in einer ersten Ausführung die jeweils gefahrene Geschwindigkeit nicht sofort zur Beeinflussung der Betriebszustände der bedienbaren Geräte 11, 12 verwendet, sondern die gefahrenen Geschwindigkeiten innerhalb der Entscheidungsanordnung 15 über einen Zeitraum t gemittelt. Erst wenn dieser gemittelte Wert oberhalb der kritischen Geschwindigkeit liegt, wird sein entsprechendes Signal auf die Datenleitung 19.1, 19.2 gegeben.

In einer zweiten Ausführung ist nicht nur der Sensor 17.1, sondern auch der Sensor 17.2 aktiv. Wird beispielsweise festgestellt, dass die tatsächlich gefahrene Geschwindigkeit oberhalb eines in der Entscheidungsanordnung abgelegten kritischen Wertes liegt, aber der Sensor 17.2, welche die Betätigung der Bremsen überwacht, über eine Zeitspanne t1 keine Bremsmanöver an die Entscheidungsanordnung 15 übermittelt, kann dies zum Anlass genommen werden, dass trotz der tatsächlichen gefahrenen Geschwindigkeit die Bedienbarkeit bzw. Nutzbarkeit der bedienbaren Geräte 11, 12 erhalten bleibt.

Neben den fahrzeugspezifischen Gegebenheiten (Geschwindigkeit, Bremsverhalten) können auch externe Gegebenheiten als Einflussgrößen berücksichtigt werden. Ist beispielsweise das Fahrzeug mit einer Empfangsanordnung 20 versehen, mit welcher beispielsweise Verkehrs- und oder Wetterinformationen empfangen werden können, können diese Information dazu genutzt werden, um das Sperren oder Freischalten der bedienbaren Geräte 11, 12, 13 zu bewirken. Dazu ist es notwendig, dass die von der Empfangsanordnung 20 empfangenen Daten an die Entscheidungsanordnung 15 übermittelt werden (in Fig. 1 nicht gezeigt). Sehr vorteilhaft wirkt sich in diesem Zusammenhang aus, wenn eine Navigationsanordnung 13 vorhanden ist, da durch die Kenntnis des jeweiligen Standorts des Fahrzeugs die entsprechenden Informationen auf den momentanen Standort beschränkt werden können. Außerdem ist das Vorhandensein einer Navigationsanordnung 13 auch deshalb von Vorteil, weil durch die Kenntnis der gerade benutzten oder der noch zu benutzenden Strassen wichtige Erkenntnisse für das Sperren von Bedienzuständen gewonnen werden können. Werden allein die Verkehrsinformationen und die Navigationsanordnung 13 eingesetzt, können objektive Erkenntnisse darüber gewonnen werden, ob beispielsweise in nächster Zeit ein Telefonieren möglich sein soll oder nicht.

Nur der Vollständigkeit halber sei darauf hingewiesen, dass die Entscheidungsanordnung 15 auch so ausgebildet sein kann, dass sämtliche von den Sensoren 17 erhaltenen Werte ausgewertet und in ein Fahrprofil umgesetzt werden, welches dann nach einem Vergleich mit einem in der Entscheidungsanordnung abgelegten Fahrprofil über die Nutzbarkeit der bedienbaren Geräte 11, 12 entscheidet. Dabei kann das in der Entscheidungsanordnung 15 abgelegte Fahrprofil auch lernfähig ausgebildet sein. Dies bedeutet, dass die Entscheidungsanordnung 15 anhand der von den Sensoren 17 erhaltenen Werte das in ihr abgelegte Fahrprofil beispielsweise an die Fähigkeiten des jeweiligen Fahrers anpasst. Hierdurch wird sichergestellt, dass wenn die Sensoren 17 Werte ermitteln, die Rückschlüsse auf einen reaktionsschnellen Fahrer zulassen, ein solcher Fahrer im Vergleich zu einem weniger reaktionsschnellen Fahrer auch in etwas kritischeren Situationen noch die bedienbaren Geräte 11, 12 nutzen kann.

Auch wenn entsprechend der Darstellung in Fig. 1 das Navigationssystem 13 nicht wie das Autotelefon 11 und das Autoradio 12 ein bedienbares Gerät ist, sondern durch die Pfeilführung wie ein Sensor wirkt, sei darauf hingewiesen, dass das Navigationssystem 13 oder besser dessen Bedienfeld (in Fig. 1 nicht gezeigt) in ähnlicher Weise wie das Bedienfeld 14 des Autoradios 12 blockiert wird, wenn anhand der Sensoren 17 in der Entscheidungsanordnung 15 eine die Bedienbarkeit oder die Nutzung des Navigationssystems 13 ausschließende Situation festgestellt wird.

Wirkt das Navigationssystem 13 entsprechend der Darstellung in Fig. 1 als Sensor, kann beispielsweise, wenn ein Fahrzeug auf Strecken bewegt wird, die wie Bergstraßen anspruchsvoll sind oder die unfallträchtig sind, ein entsprechendes Signal über die Leitung 16.3 an die Entscheidungsanordnung 15 gegeben und für eine mögliche Blockierung der bedienbaren Geräte 11, 12 verwendet werden.

Hierneben kann das Navigationssystem 13 auch zur Komfortverbesserung eingesetzt werden. Da dem Navigationssystem der Standort des Fahrzeugs immer bekannt ist, kann diese Information sehr einfach zur Herstellung einer Rufumleitung genutzt werden. Ist das Fahrzeug beispielsweise vor dem Büro oder dem Privathaus abgestellt, werden die jeweiligen Standortdaten an das Autotelefon 12 übertragen. Aus dieser Information wird die Rufumleitung aktiviert, so dass dem Benutzer die auf das Autotelefon 12 gegebenen Gespräche in Abhängigkeit von dem jeweiligen Standort des Fahrzeugs automatisch zu seinem Büro- oder Privatanschluss umgeleitet werden.

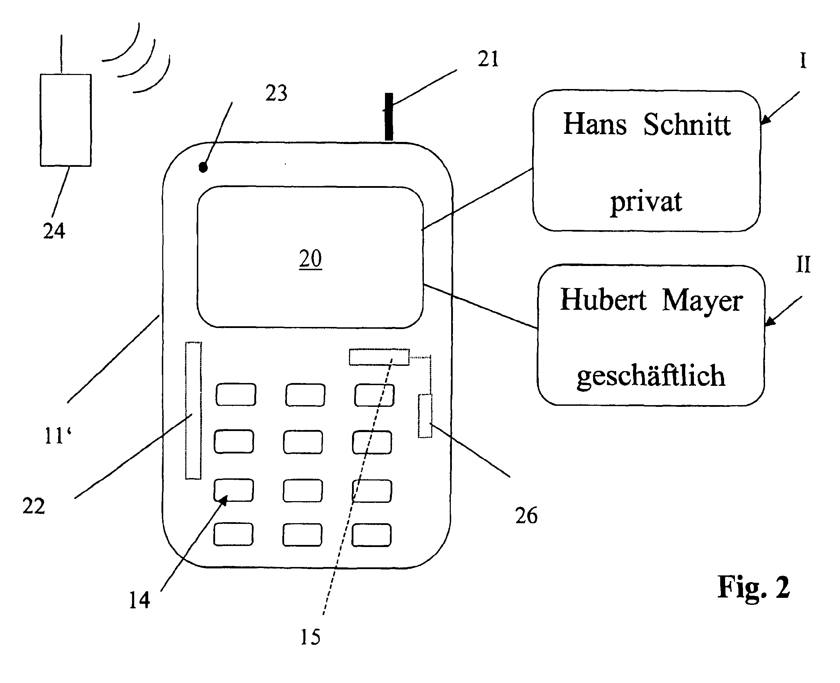

In Fig. 2 ist ein Mobiltelefon 11' gezeigt. Dieses Mobiltelefon ist mit einem Display 20, einem Bedienfeld 14 und einer Antenne 21 versehen. Außerdem ist ein Speicher 22 im Inneren des Mobiltelefons 11' vorhanden, in welchem ein Nutzer die Rufnummer, Namen und die Art der Nummer ablegen kann.

Ferner ist im Inneren des Mobiltelefons 11' auch eine Entscheidungsanordnung 15 vorgesehen, die in der ersten Ausführung mit einer Uhr 26 verbunden ist. Wird beispielsweise durch eine generelle Eingabe der Entscheidungsanordnung 15 mitgeteilt, dass geschäftliche Gespräche nur zwischen 8 und 18 Uhr zulässig sind, würde ein Anruf des Teilnehmers Hans Schnitt (siehe Displaydarstellung I) nur zwischen 18 und 8 Uhr an den Nutzer "durchgestellt", während der Teilnehmer Hubert Mayer (siehe Displaydarstellung II) wegen des Zusatzes "geschäftlich" den Nutzer auch zwischen 8 und 18 Uhr erreichen kann. Zusätzlich zur Uhr 26 kann die Entscheidungsanordnung 15 auch noch mit einem Kalender (nicht gezeigt) in Verbindung stehen, um geschäftliche Anrufe zum Beispiel am Wochenende auszuschließen. Selbstverständlich kann das in Fig. 2 gezeigte Mobiltelefon auch so modifiziert sein, dass Teilnehmer, deren Daten im Speicher 22 mit dem Vermerk "privat" abgespeichert sind, bei Anrufen während der Sperrzeit (8 bis 18 Uhr) auf den Privatanschluss des Nutzers umgeleitet werden.

Mit dem Bezugzeichen 23 ist bei dem Mobiltelefon 11' ein Sensor gezeichnet. Dieser Sensor 23 ist mit der Entscheidungsanordnung 15 verbunden und hat die Aufgabe Signale zu empfangen, die von einem vom Mobiltelefon 11' abgesetzten Sender 24 ausgestrahlt werden. Dieser Sender 24 kann beispielsweise in Flugzeugen, Büros, Krankhäusern, Privatwohnungen oder in Tankstellenbereichen installiert sein. Wird von dem Sensor 23 das vom jeweiligen Sender 23 ausgesandte Signal empfangen, kann dies beispielsweise dazu führen, dass vom Mobiltelefon 11 keine Signale mehr über die Antenne 21 abgegeben werden und eingehende Gespräche nicht mehr angezeigt werden. Letzteres ist beispielsweise in Flugzeugen sinnvoll, wo nach Verlautbarungen der Fluggesellschaften betriebsbereite Mobiltelefone 11' Probleme verursachen sollen. Wird sein solcher Sender 24 in Büros oder Privathäusern installiert, kann sichergestellt werden, dass je nach dem, wo das Mobiltelefon 11' sich gerade befindet, unerwünschte Anrufe nicht dem Nutzer "durchgestellt" werden.

Natürlich kann das in Fig. 2 gezeigte Mobiltelefon 11' auch mit einem den jeweiligen Nutzungsort des Mobiltelefons 11' ermittelnden GPS Modul (nicht gezeigt) ausgestattet oder verbunden sein. In diesem Fall kann das Mobiltelefon 11' beispielsweise so eingestellt sein, dass bei Ermittlung von Ortsdaten, welche auf eine Nutzung des Mobiltelefons 11' im Büro oder Firma schließen, keine Privatgespräche und bei Nutzung im häuslichen Bereich keine geschäftlichen Gespräche an den Nutzer übermittelt werden. Auch kann die Kombination von Mobiltelefon 11' und GPS Modul so ausgebildet sein, dass beispielsweise bei der Speicherung einer Rufnummer, welche im Büro vorgenommen wird, diese im Mobiltelefon 11' gleich anhand der Standortinformation aus dem GPS Modul mit dem Vermerk "geschäftlich" versehen wird, so dass spätere Anrufe des Teilnehmers, dessen Rufnummer gespeichert wurde, nur noch dann an den Nutzer "durchgestellt" werden, wenn das GPS Modul als momentanen Standort des Mobiltelefons 11' das Büro erkennt.

Was bisher nur für das Telefonieren im klassischen Sinne erörtert wurde, gilt natürlich auch für solche Dienste, die sich allein auf die Datenübertragung beschränken. Dies bedeutet, dass ein Nutzer, der beispielsweise keine oder nur bestimmte Faxe, E-Mails, Kurzmitteilungen über SMS und/oder Informationen aus dem Internet via dem Mobil Media Mode (WWW:MMM) außerhalb seiner Bürozeiten auf seinem Mobiltelefon 11' erhalten will, dies wie oben beschrieben durch eine Uhrzeit- oder GPS-Steuerung ausschließen kann.

Abschließend sei noch auf folgendes hingewiesen: Hat der Nutzer beispielsweise die "Übermittlung" von geschäftlichen Telefongesprächen oder Datenübertragungen in seiner Wohnung ausgeschlossen, so kann dies so realisiert sein, dass die jeweiligen Übermittlungen dem Nutzer nicht angezeigt werden. Um jedoch überflüssige und dem Nutzer nicht angezeigte Übermittlungen auszuschließen, kann zur Netzentlastung auch vorgesehen sein, dass, wenn Zeit- oder Orts-Ereignisse eintreten, die nach Nutzervorgaben bestimmte Dienste bestimmte Dienste sperren oder aktivieren sollen, diese Zeit- oder Orts-Ereignisse automatisch dem Provider mitgeteilt werden.

## Patentansprüche

1. Bedienbares Gerät (11, 12, 13) in einem Fahrzeug (10), wobei das bedienbare Gerät (11, 12, 13) über ein Bedienfeld (14) verfügt, über welches ein Nutzer vorhandene Betriebszustände des bedienbaren Geräts (11, 12, 13) herstellen und/oder
verändern kann, wobei in dem Fahrzeug mindestens ein Sensor (17.1, 17.2) vorhanden ist, **dadurch gekennzeichnet, dass**
das bedienbare Gerät eine Entscheidungsanordnung (15) umfasst, die Daten des mindestens einen Sensors (17.1, 17.2) empfangen kann, und
die Entscheidungsanordnung (1 5) so ausgebildet ist, dass die von dem mindestens einen Sensor (17.1, 17.2) erhaltenen Sensordaten in ein zeitabhängiges Fahrprofil umgesetzt werden, wobei die Entscheidungsanordnung (15) das Fahrprofil auswertet und auf der Grundlage der Auswertung über die Nutzbarkeit des bedienbaren Gerätes (11, 12, 13) entscheidet, indem bestimmte Betriebszustände des bedienbaren Gerätes (11, 12, 13) gesperrt oder freigeschaltet werden.

2. Bedienbares Gerät nach Anspruch 1, **dadurch gekennzeichnet, dass** der mindestens eine Sensor (17.1) Geschwindigkeitsdaten liefert und die Entscheidungsanordnung bei der Auswertung des Fahrprofiles die Grösse der Geschwindigkeitsänderung über einen Zeitraum bei der Auswertung des Fahrprofiles berücksichtigt.

3. Bedienbares Gerät nach Anspruch 1, **dadurch gekennzeichnet, dass** der mindestens eine Sensor Daten über den Lenkradeinschlag liefert und die Entscheidungsanordnung bei der Auswertung des Fahrprofiles die Daten über den Lenkradeinschlag über einen Zeitraum bei der Auswertung des Fahrprofiles berücksichtigt.

## Claims

1. Operatable device (11, 12, 13) in a vehicle (10), wherein the operatable device (11, 12, 13) is provided with an operating panel (14), by means of which a user can establish and/or change the existing operational states of the operatable device (11, 12, 13), wherein at least one sensor (17.1, 17.2) is present in the vehicle, **characterised in that**
the operatable device comprises a decision device (15) which can receive the data from the at least one sensor (17.1, 17.2) and
the decision device (15) is designed in such a way that the sensor data received from the at least one sensor (17.1, 17.2) is converted into a time-dependent drive profile, wherein the decision device (15) evaluates the drive profile and, on the basis of the evaluation, decides on the usability of the operatable device (11, 12, 13), **in that** specific operating states of the operatable device (11, 12, 13) are blocked or released.

2. Operatable device according to Claim 1, **characterised in that** the at least one sensor (17.1) supplies speed data and the decision device takes account in the evaluation of the drive profile of the extent of the change in speed over a period of time.

3. Operatable device according to Claim 1, **characterised in that** the at least one sensor supplies data regarding the steering wheel angle and the decision device takes account in the evaluation of the drive profile of the data regarding the steering wheel angle over a period of time.

## Revendications

1. Appareil contrôlable (11, 12, 13) dans un véhicule (10), l'appareil contrôlable (11, 12, 13) disposant d'un panneau de commande (14) par l'intermédiaire duquel un utilisateur peut établir et/ou modifier des états de fonctionnements existants de l'appareil contrôlable (11, 12, 13), au moins un capteur (17.1, 17.2) étant présent dans le véhicule,
**caractérisé en ce que**
l'appareil contrôlable comprend un système de décision (15), qui peut réceptionner des données du capteur (17.1, 17.2) au moins au nombre de un, et
**en ce que** le système de décision (15) est conçu de telle sorte que les données de capteur obtenues par le au moins un capteur (17.1, 17.2) sont converties en un profil de conduite dépendant du temps, le système de décision (15) analysant le profil de conduite et décidant de la possibilité d'utilisation de l'appareil contrôlable (11, 12, 13) sur la base de l'analyse en verrouillant ou en déverrouillant certains états de fonctionnement de l'appareil contrôlable (11, 12, 13).

2. Appareil contrôlable selon la revendication 1, **caractérisé en ce que** le capteur (17.1, 17.2) au moins au nombre de un fournit des données de vitesse, et **en ce que** le système de décision (15) tient compte, lors de l'analyse du profil de conduite, de l'importance du changement de la vitesse sur une période lors de l'analyse du profil de conduite.

3. Appareil contrôlable selon la revendication 1, **caractérisé en ce que** le capteur au moins au nombre de un fournit des données sur l'angle de braquage, et **en ce que** le système de décision tient compte, lors de l'analyse du profil de conduite, des données sur l'angle de braquage sur une période lors de l'analyse du profil de conduite.
